# EUROPEAN PATENT APPLICATION

(11) **EP 1 674 803 A2**
(43) Date of publication of application: **28.06.2006**
(21) Application number: 05025192.5
(22) Date of filing: 18.11.2005
(51) Int. Cl.: F24F 7/08, F24F 11/00, F24F 1/00

(54) **Air conditioner**

(30) Priority: 08.12.2004 JP 2004354802
(71) Applicant: SANYO ELECTRIC CO., LTD., Moriguchi-shi, Osaka-fu (JP); SANYO AIR-CONDITIONERS CO., LTD., Ora-gun, Gunma-ken (JP)
(72) Inventor: Unagida, Hiroaki, Osato-gun Saitama-ken (JP); Matsumoto, Kouichi, Kumagaya-shi Saitama-ken (JP)
(74) Representative: Twelmeier, Ulrich

(57) **Abstract**

An air conditioner with a refrigerant pipe (2) from an indoor unit (1) led out outdoors through a hole (4) of a building wall and connected to an outdoor unit (3). The air conditioner comprises: an air duct (23, 24) inserted through the hole of the building wall; a ventilation fan unit (21, 22) connected to the air duct; and a control means (46) for controlling the operation of the fan unit. The control means reduces the amount of ventilated air in a sleep operation mode lower than that in a normal operation mode.

## Description

### BACKGROUND OF THE INVENTION

### Field of the Invention

The present invention relates to an air conditioner, and more particularly to ventilation of the room associated therewith.

### Description of the Related Art

A general air conditioner such as a domestic appliance has no ventilator. It is therefore required timely to open a window manually to take outdoor air in for ventilation when it is poor in the room air.

There has been proposed an air conditioner equipped with a ventilation fan unit in the art as disclosed in the patent publication 1 (JP-A 2001/304645).

The amount of airflow sent from the ventilation fan unit (the amount of ventilated air) is not varied even when the air conditioner operates in a sleep operation mode. Accordingly, the sounds of a fan in the fan unit revolving and breeze cutting interfere with a quiet sleep. The densities of carbon dioxide and other gases in the room in sleep are considerably lower than those during the activity in the daytime. Accordingly, the fan unit runs uselessly and wastes the consumed power.

The problems to be solved are present in that: the amount of ventilated air is not varied even in the sleep operation mode and accordingly the sounds of the fan in the fan unit revolving and breeze cutting interfere with a quiet sleep; and that the condition of the air pollution in the room in sleep is considerably lower than that during the activity in the daytime and accordingly the fan unit runs uselessly and wastes the consumed power.

### SUMMARY OF THE INVENTION

The present invention provides an air conditioner with a refrigerant pipe (2) from an indoor unit (1) led out outdoors through a hole (4) of a building wall and connected to an outdoor unit (3), comprising: an air duct (23, 24) inserted through the hole of the building wall; a ventilation fan unit (21, 22) connected to the air duct; and a control means (46) for controlling the operation of the fan unit, wherein the control means reduces the amount of ventilated air in a sleep operation mode lower than that in a normal operation mode.

The air conditioner may further comprise an air pollution sensor (47, 48) provided to detect indoor air pollution, wherein the control means further suppress ventilation in the normal operation mode and halts ventilation in the sleep operation mode when the condition of the air pollution detected at the air pollution sensor lowers below a ventilation suppressive setting.

The control means may halt ventilation when the condition of the air pollution detected at the air pollution sensor lowers below a ventilation suppressive setting, and the ventilation suppressive setting may be higher in the sleep operation mode than in the normal operation mode.

In the present invention, the control means reduces the amount of ventilated air in the sleep operation mode lower than that in the normal operation mode. Therefore, the sounds of the fan in the fan unit revolving and breeze cutting in the sleep operation mode can be reduced to prevent the interference with a quiet sleep to the utmost.

The control means further suppress ventilation in the normal operation mode and halts ventilation in the sleep operation mode when the condition of the air pollution lowers below a ventilation suppressive setting. Therefore, the fan unit can be halted in sleep, if possible, to reduce the power consumption because the frequency of air pollution in the room is low.

The control means halts ventilation when the condition of the air pollution detected at the air pollution sensor lowers below the ventilation suppressive setting. In this case, the ventilation suppressive setting is higher in the sleep operation mode than in the normal operation mode. Therefore, the fan unit can be halted in sleep, if possible, to reduce the power consumption because the frequency of air pollution in the room is low.

### BRIEF DESCRIPTION OF THE DRAWINGS

Fig. 1 is a perspective view of an indoor unit and an outdoor unit of an air conditioner according to the present invention;
Fig. 2 is a cross-sectional view of the indoor unit;
Fig. 3 is a partly cut-off perspective view of the major part of the indoor unit;
Fig. 4 illustrates a remote controller in (a) a front view and (b) a fronts cover-removed front view;
Fig. 5 illustrates control of the air conditioner in (a) an operation pattern table and (b) a controller input/output diagram;
Fig. 6 is a brief illustrative view of an air-supply/exhaust operation;
and Fig. 7 is a brief illustrative view of double exhaust; and
Fig. 8 is a flowchart associated with a sleep operation mode.

### DETAILED DESCRIPTION OF THE INVENTION

The object to prevent the sounds of the fan in the ventilation fan unit revolving and breeze cutting from interfering with a quiet sleep can be achieved by controlling the fan unit such that the control means reduces the amount of ventilated air in a sleep operation mode lower than that in a normal operation mode.

### EXAMPLE 1

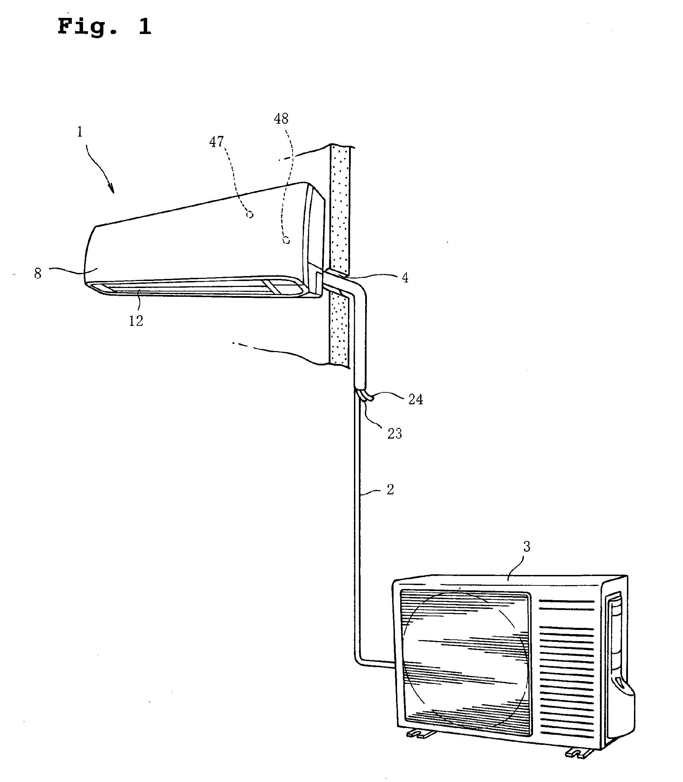

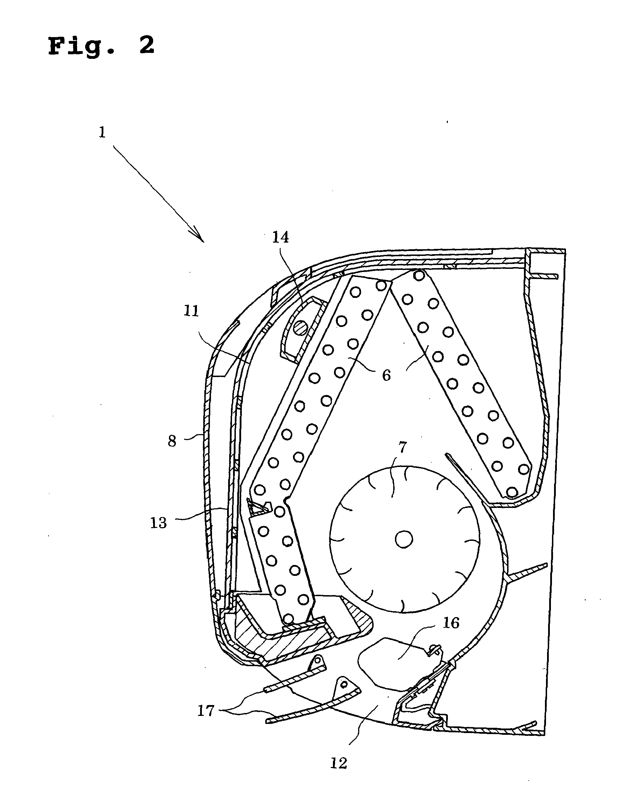

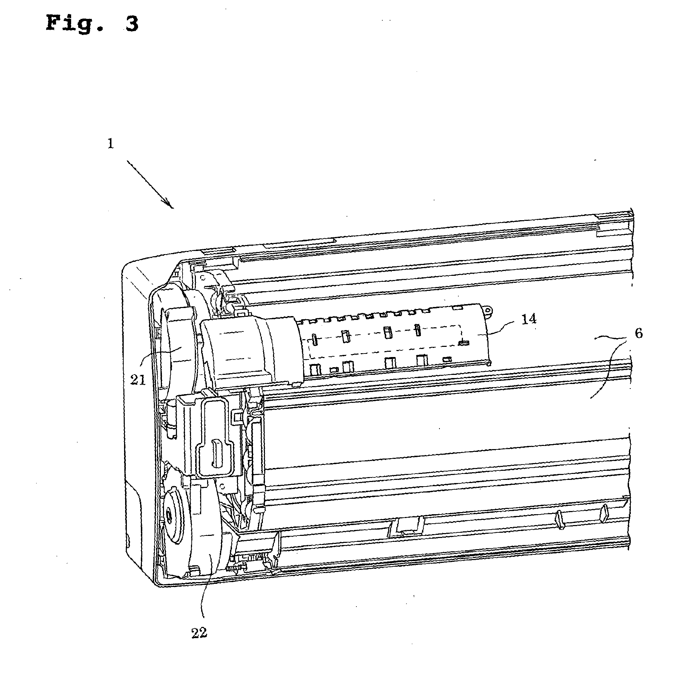

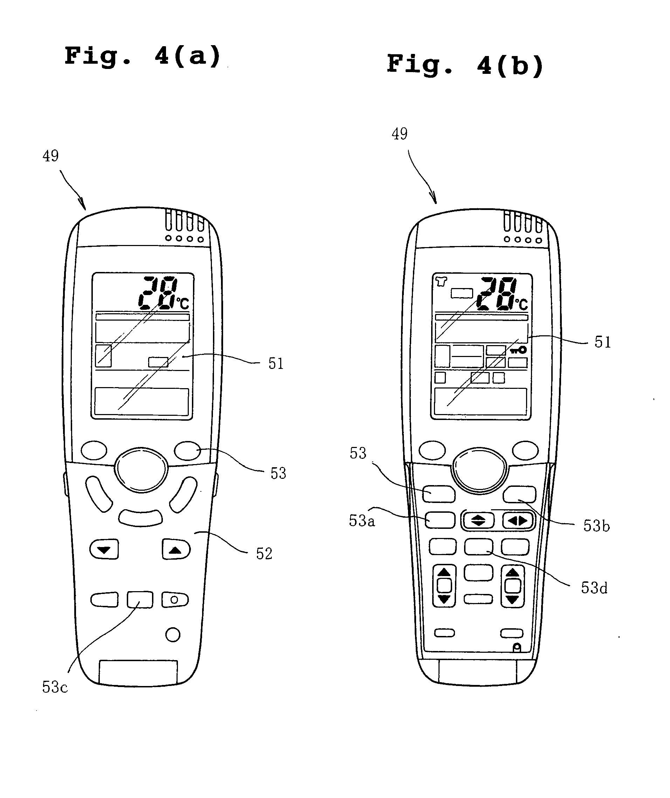

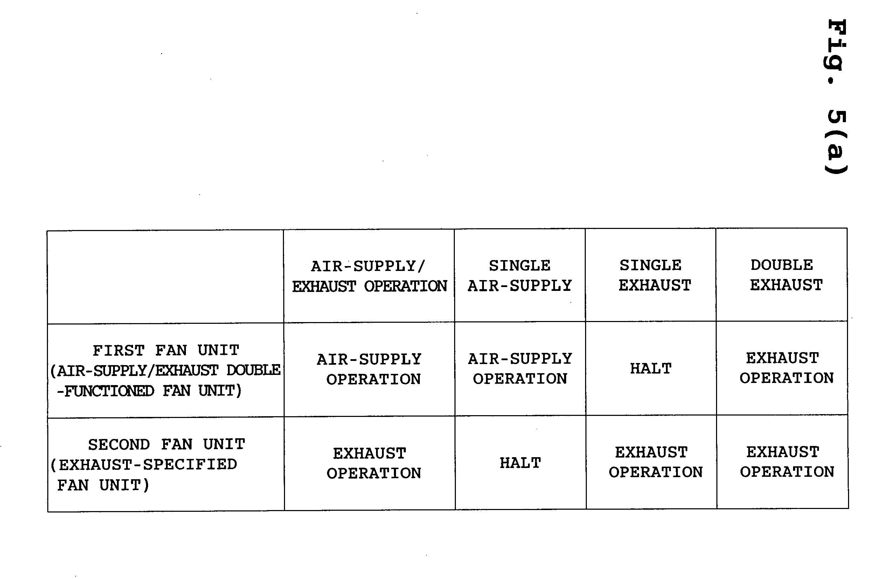

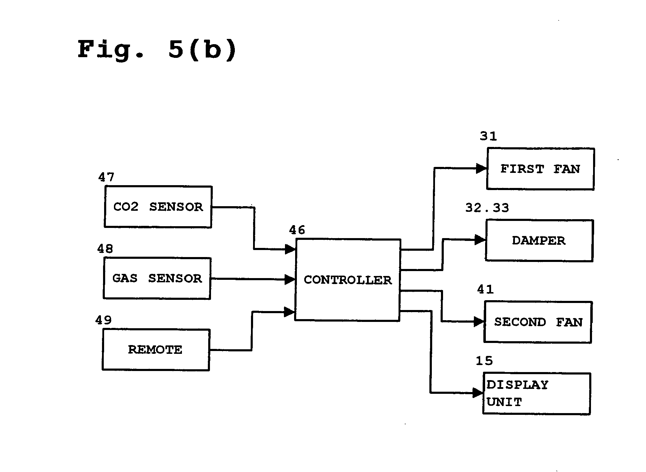

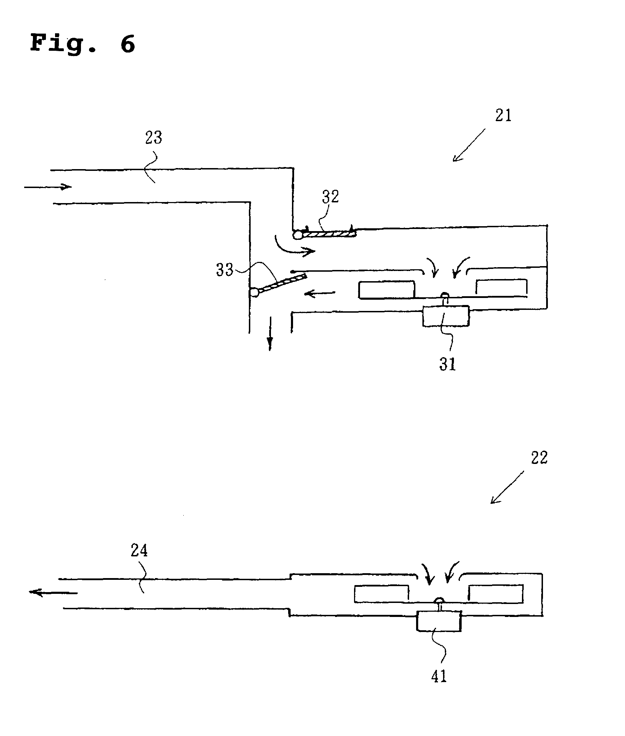

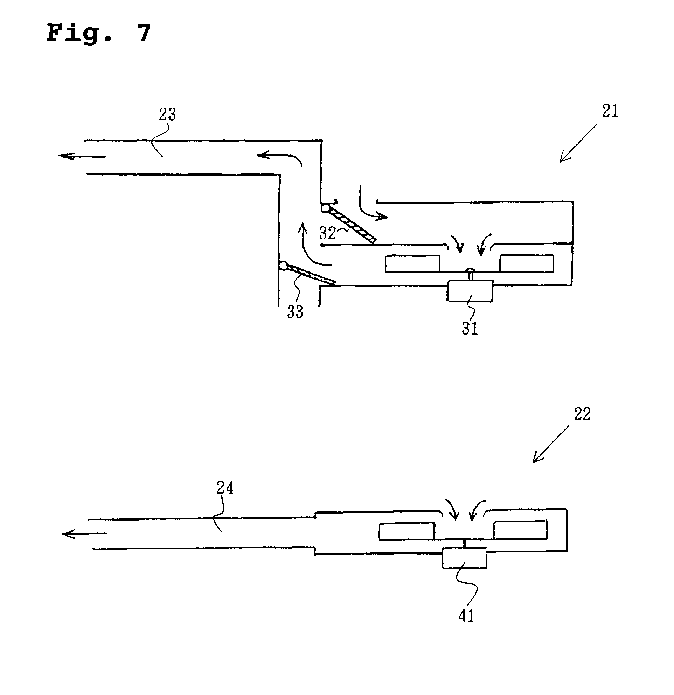

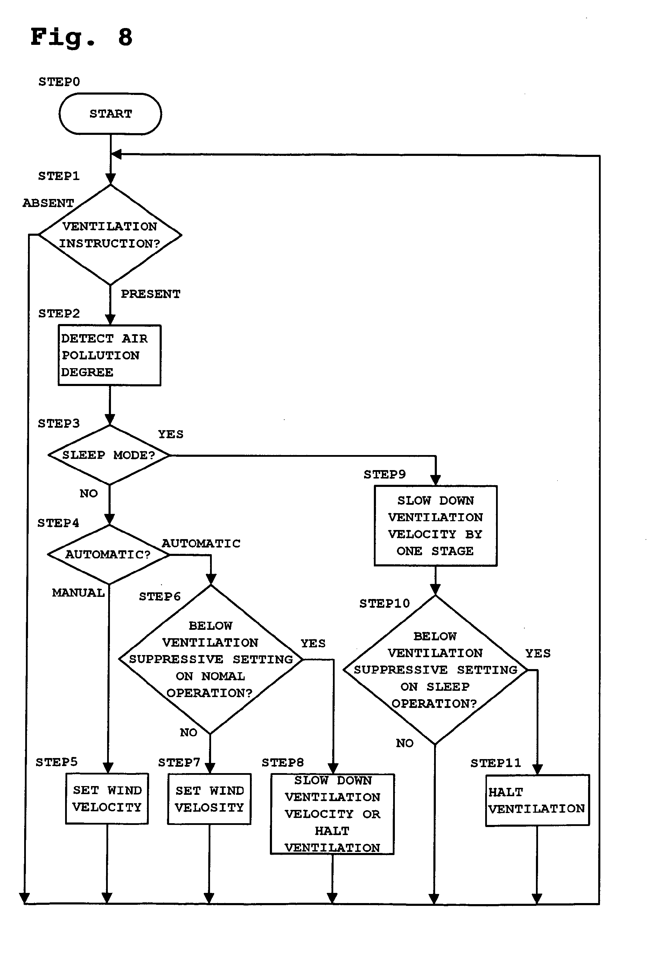

An example of the air conditioner according to the present invention is described next with reference to Figs. 1-8. Fig. 1 is a perspective view of an indoor unit and an outdoor unit of the air conditioner according to the present invention. Fig. 2 is a cross-sectional view of the indoor unit. Fig. 3 is a partly cut-off perspective view of the major part of the indoor unit. Fig. 4 illustrates a remote controller in (a) a front view and (a) a front cover -removed front view. Fig. 5 illustrates control of the air conditioner in (a) an operation pattern table and (b) a controller input/output diagram. Fig. 6 is a brief illustrative view of an air-supply/exhaust operation. Fig. 7 is a brief illustrative view of double exhaust. Fig. 8 is a flowchart associated with a sleep operation mode. In Fig. 5 (b) only ventilation-related primary parts are shown and other parts not shown are also connected to the controller.

At first, the whole arrangement of the air conditioner is described. In Fig. 1 the air conditioner comprises an indoor unit 1, and an outdoor unit 3 connected to the indoor unit 1 via a pair of refrigerant pipe 2. The indoor unit 1 is located a indoor wall while the outdoor unit 3 is located outdoor. The refrigerant pipe 2 runs through an hole 4 formed through the wall of the house to connect the indoor unit 1 with the outdoor unit 3. The outdoor unit 3 includes equipment such as a compressor (not shown) operative to compress a refrigerant gas, an outdoor side heat exchanger (not shown), a refrigerant circulation path-changing valve (not shown) operative to switch between refrigerant flow direction in circulation paths, and a heat exchanger fan (not shown). In operation of the outdoor unit 3, the refrigerant circulates from the outdoor unit 3 through the refrigerant pipe 2 to the indoor unit 1 for heating/cooling.

In Fig. 2 the indoor unit 1 includes an indoor side heat exchanger 6, and a circulation fan 7. A movable front panel 8 is provided at the front of the indoor unit 1, and an air inlet 11 is provided behind the front panel 8. On running of the indoor unit 1, the front panel 8 moves forward to allow the air inlet 11 to take room air therethrough into the indoor unit 1. During halts of the indoor unit 1, the front panel 8 moves rearward or toward the air inlet 11 to enhance the appearance. An air outlet 12 is provided under side of the indoor unit 1. A filter 13 is provided at the front of the air inlet 11. An ultraviolet lamp unit 14 is located above the indoor unit heat exchanger 6.

On running of the circulation fan 7 in the indoor unit 1. indoor air is filtrated through the filter 13, drawn through the air inlet 11, heat-exchanged at the indoor unit heat exchanger 6, and blown to the room from the air outlet 12. Thus, during circulation of indoor air by the circulation fan 7, the air is heat-exchanged at the indoor side heat exchanger 6.

To change the direction of airflow, louvers 16, 17 are provided in the air outlet 12. The lateral louver 16 changes the lateral direction of air blown out. The vertical louver 17 changes the vertical direction of air blown out.

In Fig. 3 a first ventilation fan unit 21 and a second ventilation fan unit 22 are provided at a side of the indoor unit 1. In Figs. 1 and 6 the fan units 21, 22 are connected to air ducts 23, 24. The air ducts 23, 24, like the refrigerant pipe 2, are led out outdoors through the hole 4 formed through the wall of the house, and brought into communication with outdoor air.

In Fig. 6 the first fan unit 21 is the ventilation fan unit for taking in the air from the outside or exhausting the room air, which includes a first fan 31, an inlet side damper 32, and an outlet side damper 33. The first fan 31 is a sirocco fan capable of sending a sufficient amount of air, which, on running, forms airflow in a predetermined direction which is to outlet side from inlet side. As shown in Figs. 6 and 7, the inlet side of the first fan 31 is selectively connected by the inlet damper 32 either to the first air duct 23 or to the inside of the indoor unit 1. On the other hand, the outlet side of the first fan 31 is selectively connected by the outlet damper 33 either to the first air duct 23 or to the inside of the indoor unit 1. Thus, the dampers 32, 33 make an air path changing means operative to switch airflow. At taking in the air from outside, the dampers 32, 33 of the first fan unit 21, are changed to taking-in position as shown in Fig. 6. In this case, the inlet damper 32 connects the inlet side of the first fan 31 to the first air duct 23, and the outlet damper 33 connects the outlet side of the first fan 31 to the inside of the indoor unit 1. This operation is air-supply mode. At exhausting the room air, on the other hand, the dampers 32, 33 of the first fan unit 21 are changed to an exhausting position as shown in Fig. 7. In this case, the inlet damper 32 connects the inlet side of the first fan 31 to the inside of the indoor unit 1, and the outlet damper 33 connecte the outlet side of the first fan 31 to the first air duct 23. This operation is exhaust mode.

The second fan unit 22 is an exhausting fan unit, which includes a second fan 41, but includes no damper for changing the airflow. The second fan 41 is a sirocco fan, similar to the first fan 31, which, on running, forms airflow in a predetermined direction. As shown in Figs. 6 and 7, the second fan 41 has an inlet side connected to the inside of the indoor unit 1, and an outlet side connected to the second air duct 24. This operation is exhaust mode. As described, the first fan unit 21 has air-supply mode and exhaust mode, the second fan unit 22 has exhaust mode. As shown in Fig. 5(a), the air conditioner of this example has therefore four types of ventilation patterns: an air-supply/exhaust operation; a single air-supply operation; a single exhaust operation; and a double exhaust operation.

A controller 46 for controlling the air conditioner having a microcomputer and controls operation of the air conditioner. In particular, with respect to ventilation, as shown in Fig. 5(b), the controller 46 receives a signal from a CO2 sensor 47 located in the vicinity of the indoor unit heat exchanger 6 and operative to detect the density of a CO2 gas. It also receives a signal from a gas sensor 48 located in the vicinity of the indoor unit heat exchanger 6 and operative to detect the density of cigarette smoke, and a signal from a remote controller 49 serving as an operating unit. The CO2 sensor 47 and the gas sensor 48 serve as air pollution sensors operative to detect air pollution, The controller 46 provides drive signals to the first fan 31 and dampers 32, 33 in the first fan unit 21 and the second fan 41 in the second fan unit 31. The controller 46 is also connected to various types of other equipment in the indoor unit 1 and the outdoor unit 3, which are allowed to input and output. The controller 46 includes a storage unit (such as EPROM and RAM) provided to store various settings , and a timer, not shown, contained therein. In particular, with respect to the sleep operation mode of this example, the storage unit of the controller 46 is employed to store a ventilation suppressive setting in the sleep operation mode and a sleep operation mode flag.

The remote controller 49 having a display section 51 and a detachable front cover 52 as shown in Fig. 4. A plurality of various buttons 53 is provided as operating units on the front cover 52 and the body of the remote controller 49. As shown in Fig. 4(b), ventilation-related operational buttons such as a ventilation switching button 53a and a ventilation power button 53b are exposed and made operable when the front cover 52 is opened. An operational button for starting the ventilation operation or a ventilation cleaning button 53c is provided on the front cover 52 as shown in Fig. 4(a). In addition, a sleep operation mode button 53d bearing the indication of PLEASANT SLEEP is exposed and made operable when the front cover 52 is detached as shown in Fig. 4(b).

When the ventilation switching button 53a is pressed, an air-supply/exhaust operation with both air-supply and exhaust, an air-supply operation with only air-supply, and an exhaust operation with only exhaust can be sequentially instructed to the controller 46 in the body of the indoor unit 1, and the ventilation operation mode is indicated on the display section 51. When the ventilation power button 53b is pressed, instructions on the power of ventilation are sequentially selected among strong, middle and weak, and the selected instruction is given to the controller 46 in the body of the indoor unit 1.

The flow of changing the sensitivity to the condition of the air pollution is described based on the flowchart of Fig. 8.

In STEP 1, the controller 46 determines whether the ventilation switching button 53a or the ventilation cleaning button 53c is operated in the remote controller 49 and a ventilation instruction is provided from the remote controller 49. If any ventilation instruction is absent (the ventilation flag is made OFF), then the controller waits for input of any ventilation instruction. If a ventilation instruction is present (the ventilation flag is made ON), on the other hand, then the controller goes to STEP 2.

In STEP 2, the controller 46 acquires the condition of the air pollution detected at the air pollution sensors, or the CO2 sensor 47 and the gas sensor, and then goes to STEP 3.

In STEP 3, the controller 46 determines whether the sleep operation mode button 53d is operated and an instruction on the sleep operation mode is provided from the remote controller 49. If the instruction on the sleep operation mode is absent (the sleep operation mode flag is made OFF), then the controller goes to STEP 4 to start the normal operation mode in STEPS 4-8. If the instruction on the sleep operation mode is present (the sleep operation mode flag is made ON), on the other hand, then the controller goes to STEP 9 to start the sleep operation mode in STEPS 9-11.

In STEP 4, the controller 46 determines whether the ventilation is performed in an automatic operation with the fan unit automatically controlled based on the condition of the air pollution or in a manual setting operation with the fan unit manually run at a certain amount of airflow. If the operation is automatic, then the controller goes to STEP 6. To the contrary, if the operation is manual, then the controller goes to STEP 5. In STEP 5, the controller 46 provides an operation signal to the fan units 21, 22 to perform ventilation in an instructed operation (the air-supply/exhaust operation, the air-supply operation, or the exhaust operation). In addition, the controller controls such that the amount of airflow coincides with a value instructed from the ventilation power button 53b, and then returns to STEP 1 to continue the manual setting operation.

If the operation is automatic in STEP 4, then the controller goes to STEP 6 as described above. In STEP 6, the controller 46 determines whether the condition of the air pollution is below a ventilation suppressive setting in the normal operation mode set in the storage unit. If it is determined below the ventilation suppressive setting, then the controller goes to STEP 8. If it exceeds the ventilation suppressive setting, to the contrary, then the controller goes to STEP 7. In STEP 7, the controller 46 controls such that the amount of airflow from the fan unit 21, 22 coincides with a value instructed from the ventilation power button 53b, and then returns to STEP 1.

If the condition of the air pollution is below the ventilation suppressive setting in the normal operation mode in STEP 6, then the controller goes to STEP 8 as described above. In this case, the controller 46 reduces the amount of airflow from the fan unit 21, 22 below the value instructed from the ventilation power button 53b or halts the fan unit 21, 22, and then returns to STEP 1.

If the sleep operation mode is instructed in STEP 3, then the controller goes to STEP 9 as described above. In this case, the controller 46 reduces the amount of airflow from the fan unit 21, 22 below the value instructed from the ventilation power button 53b by one stage (for example, to middle from strong, or to 80% the instructed amount of airflow), and then goes to STEP 10.

In STEP 10, the controller 46 determines whether the condition of the air pollution is below the ventilation suppressive setting in the sleep operation mode set in the storage unit and, if below, then goes to STEP 11. To the contrary, if it exceeds, then the controller 4 6 returns to STEP 1 and maintains the amount of airflow from the fan unit 21, 22 below the value instructed from the ventilation power button 53b by one stage.

In STEP 10, if the condition of the air pollution is below the ventilation suppressive setting in the sleep operation mode, then the controller goes to STEP 11 as described above. In this case, the controller 46 halts the fan unit 21, 22 and then returns to STEP 1 to maintain the state of ventilation halted until the condition of the air pollution exceeds the ventilation suppressive setting in the sleep operation mode.

Thus, in this example, the normal operation mode includes the operations instructed from the remote controller 49 (such as the air-supply/exhaust operation, the air-supply operation and the exhaust operation), the manual setting operation of performing ventilation with the instructed amount of airflow, and the automatic operation of controlling ventilation automatically based on the condition of the air pollution. In addition to the normal operation mode, the sleep operation mode is provided.

In a word, based on the instruction signals from the ventilation switching button 53a and the ventilation power button 53b in the remote controller 49, the controller 46 runs the fan unit 21, 22 in the instructed operation (such as the air-supply/exhaust operation, the air-supply operation and the exhaust operation) with the instructed amount of airflow (the manual setting operation).

When the instruction signal is given from the ventilation cleaning button 53c in the remote controller 49, the controller 46 runs the fan unit 21, 22 in the instructed operation (such as the air-supply/exhaust operation, the air-supply operation and the exhaust operation) with the instructed amount of airflow if the condition of the air pollution is above the ventilation suppressive setting. On the other hand, if the condition of the air pollution is below the ventilation suppressive setting, the controller runs the fan unit 21, 22 with the amount of airflow lower than the instructed amount of airflow or halts the fan unit 21, 22 (the automatic operation).

When the instruction signal is given from the sleep operation mode button 53d in the remote controller 49, the controller 46 runs the fan unit 21, 22 with the amount of airflow lower by one stage than the instructed amount of airflow. In addition, when the condition of the air pollution lowers below the ventilation suppressive setting, the controller halts the fan unit 21, 22 (the sleep operation mode). The ventilation suppressive setting in the sleep operation mode may have either the same value as that of the ventilation suppressive setting in the normal operation mode or a value higher than that of the ventilation suppressive setting in the normal operation mode.

The frequency of polluting air in sleep is lower than that on activity in the daytime. The controller halts the fan units when the condition of the air pollution lowers below the ventilation suppressive setting in the sleep operation mode. The ventilation suppressive setting has a value higher than the condition of the air pollution for a halt on the automatic operation in the normal operation mode. Therefore, the fan units are halted earlier and longer in sleep than on activity because the frequency of air pollution is lower in sleep. This is effective to prevent the fan units from running uselessly to the utmost.

As described above, the controller, as the control means, having following controls of: 1) reducing the amount of ventilated air lower in the sleep operation mode than in the normal operation mode; and 2) further suppressing ventilation in the normal operation mode and halting ventilation in the sleep operation mode when the condition of the air pollution lowers below the ventilation suppressive setting.

In addition to the above means, the control means further includes means corresponding to each step to be executed, which is operative to execute each step. It is not always required to include all of the above means.

The example of the invention has been described in detail though the present invention is not limited to the above example but rather can be modified variously within the scope of the invention as recited in the appended claims. Modifications of the present invention may be exemplified as below.
(1) The format of and the number of the fan units can be altered appropriately. For example, only one exhaust fan unit is applicable. Alternatively, when the second fan unit 22 is an air-supply/exhaust double-functioned fan unit, a double air-supply operation can be performed. The number of the ducts can be altered appropriately. For example, only one duct is applicable.
(2) The fan is preferably a sirocco fan though it may also be a fan in another form.
(3) The sequence of the steps in each flowchart may be modified appropriately. For example, the sequence may be switched between STEP 1 and STEP 2.
(4) The control means comprises a microcomputer though it may have another configuration.
(5) The refrigerant pipe 2 and the air ducts 23, 24 may be inserted either through the same hole of the wall of the house or through different holes separately. The hole of the wall for the air conditioner may be employed to insert a drain pipe, power wires and communications wires therethrough, in addition to the refrigerant pipe 2 and the air pipes 23, 24.
(6) The air pollution sensors may select appropriate sensors other than the CO2 sensor and the gas sensor if they can detect indoor air pollution.
(7) The amount of airflow is made smaller in the sleep operation mode than in the normal operation mode by appropriately selectable methods. For example, the amount of airflow for the sleep operation mode may be set in the storage unit previously. Alternatively, it may be obtained by multiplying the instructed amount of airflow by a certain proportion for reduction (such as 80 %), or subtracting a certain amount of airflow from the instructed amount of airflow. Otherwise, it may be obtained by changing the instructed amount of airflow from strong to middle or from middle to weak.

### INDUSTRIAL AVAILABILITY

The control means controls the fan units such that the amount of ventilated air is made lower in the sleep operation mode than in the normal operation mode. Thus, it is possible to reduce the amount of ventilated air or the amount of airflow and lower the sounds of the fan in the fan unit revolving and breeze cutting in the sleep operation mode. This is effective to prevent the interference with a quiet sleep correspondingly to the utmost. Therefore, the present invention is optimally applicable to air conditioners operative to ventilate while air conditioning.

## Claims

1. An air conditioner with a refrigerant pipe from an indoor unit led out outdoors through a hole of a building wall and connected to an outdoor unit, comprising:
an air duct inserted through the hole of the building wall;
a ventilation fan unit connected to the air duct; and
a control means for controlling the operation of the fan unit,
wherein the control means reduces the amount of ventilated air in a sleep operation mode lower than that in a normal operation mode.

2. The air conditioner according to claim 1, further comprising an air pollution sensor provided to detect indoor air pollution,
wherein the control means further suppress ventilation in the normal operation mode and halts ventilation in the sleep operation mode when the condition of the air pollution detected at the air pollution sensor lowers below a ventilation suppressive setting.

3. The air conditioner according to claim 1, further comprising an air pollution sensor provided to detect indoor air pollution,
wherein the control means halts ventilation when the condition of the air pollution detected at the air pollution sensor lowers below a ventilation suppressive setting,
wherein the ventilation suppressive setting is higher in the sleep operation mode than in the normal operation mode.
